# EUROPEAN PATENT APPLICATION

(11) **EP 4 809 813 A1**
(43) Date of publication of application: **23.09.2026**
(21) Application number: 25165373.9
(22) Date of filing: 21.03.2025
(51) Int. Cl.: A01F 15/08

(54) **A BALER**

(71) Applicant: CNH Industrial Belgium N.V., 8210 Zedelgem (BE)
(72) Inventor: ABBINANTE, Massimiliano, 8210 Zedelgem (BE); DEFRUYT, Bert, 8210 Zedelgem (BE); NONA, Kenny, 8210 Zedelgem (BE)
(74) Representative: CNH Industrial IP Department

(57) **Abstract**

A controller (452) for a baler (410). The controller (452) is configured to receive a torque value (457), representative of the torque passing through a component of the baler (410), and compare the received torque value (457) with a torque setpoint. The controller (452) is then configured to determine a target speed (454) for the baler (410) based on the difference between the received torque value (457) and the torque setpoint.

## Description

### FIELD OF THE INVENTION

The present disclosure relates to balers, controllers for balers, and method of operating balers.

### SUMMARY OF THE INVENTION

According to a first aspect of the present disclosure, there is provided a controller for a baler, the controller configured to:
receive a torque value, representative of the torque passing through a component of the baler;
compare the received torque value with a torque setpoint; and
determine a target speed for the baler based on the difference between the received torque value and the torque setpoint.

The determined target speed can be used in one or more of a number of different ways to improve the performance of the baler. The performance can be improved in terms of one or more of: improving the speed / efficiency of a baling operation; increasing the baling capacity of the baler; reducing the number of interruptions to the baling operation; and reducing the amount of crop that is left in the field.

The controller may be configured to determine the target speed based on the difference between: i) a plurality of received torque values that have been sequentially generated over a period of time; and ii) the torque setpoint.

The controller may be configured to:
compare each of the sequence of received torque values with the torque setpoint in order to generate a sequence of torque error values; and
apply a proportional-integral-derivative algorithm to the sequence of torque error values in order to determine the target speed for the baler.

The controller may be configured to determine the target speed for the baler based on the magnitude of the difference between the received torque value and the torque setpoint by:
if the received torque value is less than the torque setpoint, then increasing the target speed by an amount that is based on the magnitude of the difference between the received torque value and the torque setpoint; and
if the received torque value is greater than the torque setpoint, then decreasing the target speed by an amount that is based on the magnitude of the difference between the received torque value and the torque setpoint.

The component of the baler may comprise:
a packer shaft;
a rotor shaft; or
a drive shaft that is connectable to a power take-off of an associated tractor.

The controller may be further configured to:
automatically control the speed of the baler based on the determined target speed.

The controller may be further configured to automatically control the speed of a tractor that is providing a motive force to the baler based on the determined target speed.

The controller may be further configured to:
set a speed limit of the baler based on the determined target speed.

The controller may be further configured to:
display the determined target speed for the baler to an operator of the baler such that the operator can control the speed of the baler in response to the displayed target speed.

The controller may be further configured to display the target speed for the baler relative to a current speed of the baler.

The controller may be further configured to display the received torque value relative to the torque setpoint and / or a maximum torque value.

The controller may be configured to:
determine the variability of received torque values over an earlier period of time; and
set the torque setpoint based on the determined variability.

The controller may be configured to:
receive a sequence of swath measurement values, which represents the amount of crop entering the baler over a period of time; and
determine a sequence of torque error values based on the difference between: i) a plurality of received torque values that have been sequentially generated over the period of time; and ii) the torque setpoint;
apply a control algorithm to the sequence of torque error values to determine a sequence of desired amount of crop intake values;
use the sequence of swath measurement values to set parameters of a model that is used to convert the sequence of desired amount of crop intake values to the target speed; and
determine the target speed for the baler by applying the model to the sequence of desired amount of crop intake values.

There is also disclosed a baler comprising any controller disclosed herein.

There is also disclosed a tractor-baler combination comprising any controller disclosed herein, wherein the tractor is for applying a motive force to the baler.

According to a further aspect of the present disclosure, there is provided a computer-implemented method of operating a baler, the method comprising:
receiving a torque value, representative of the torque passing through a component of the baler;
comparing the received torque value with a torque setpoint; and
determining a target speed for the baler based on the difference between the received torque value and the torque setpoint.

There may be provided a computer program, which when run on a computer, causes the computer to configure any apparatus, including a controller or vehicle disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### BRIEF DESCRIPTION OF THE DRAWINGS

Fig. 1 is a perspective cutaway view showing the internal workings of a large square baler according to an embodiment of the present disclosure;
Figs. 2 and 3 are schematic illustrations showing the formation of a bale within the large square baler of Fig. 1;
Fig. 4 shows schematically a system according to an embodiment of the present disclosure;
Fig. 5 shows two plots that will be used to describe operation of the controller of Fig. 4, when it is used to automatically control the speed of the baler;
Fig. 6 illustrates schematically a baler according to an embodiment of the present disclosure when it is in use in an agricultural field;
Fig. 7 shows a plot that illustrates an example of measured torque values; and
Fig. 8 illustrates schematically a computer-implemented method of operating a baler according to an embodiment of the present disclosure.

### DETAILED DESCRIPTION

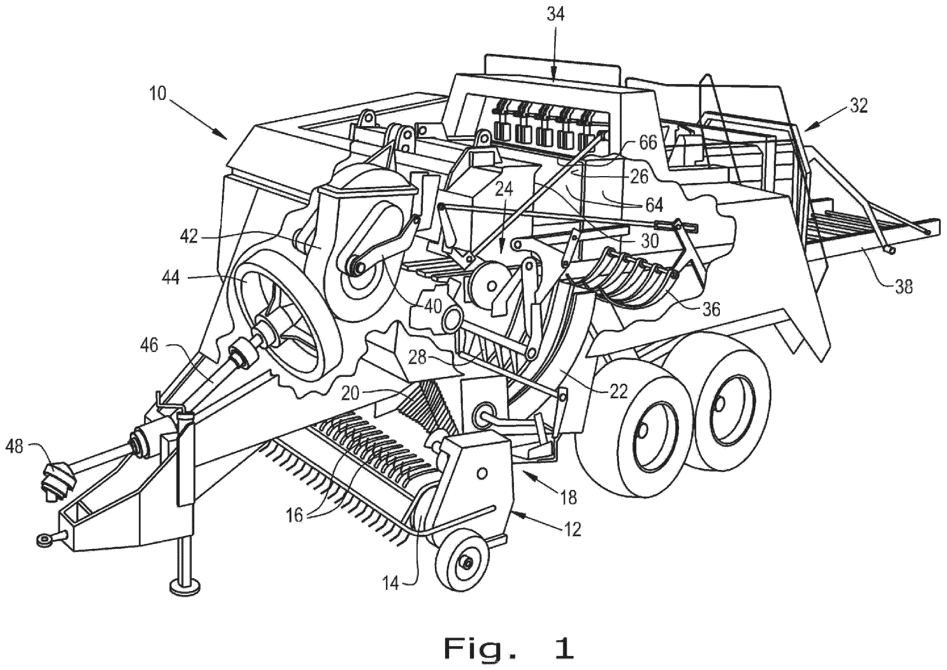

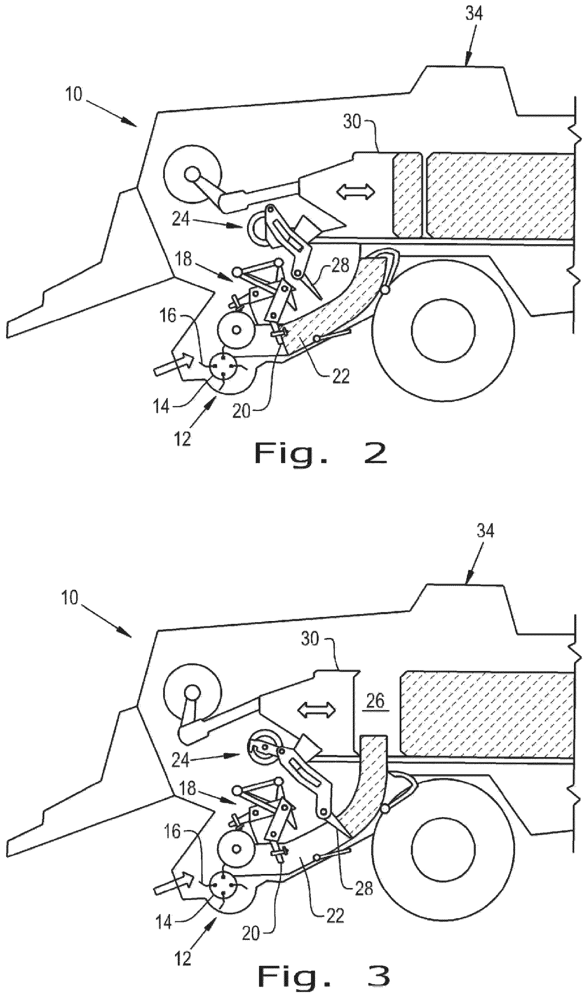

Referring now to the drawings, and more particularly to Figs. 1-3, there is shown an agricultural harvesting machine in the form of a large square baler 10. Fig. 1 is a perspective cutaway view showing the internal workings of the large square baler 10, and Figs. 2 and 3 are schematic illustrations showing the formation of a bale within the baler 10. In this example, the baler 10 is towed by a tractor such that the tractor provides a motive force to the baler 10. Such a tractor and baler can be referred to as a tractor-baler combination. In other examples, the baler is self-powered.

The baler 10 operates on a two-stage feeding system. Crop material is lifted from rows of swath into the baler 10 using a pickup unit 12. The pickup unit 12 includes a rotating pickup roll 14 with tines 16 which move the crop rearward toward a packer unit 18. In other examples, rotor unit (not shown in the figure) may be used instead of the packer unit 18. An optional pair of stub augers (one of which is shown, but not numbered) is positioned above the pickup roll 14 to move the crop material laterally inward. The packer unit 18 includes packer tines 20 which push the crop into a pre-compression chamber 22 to form a wad of crop material. The packer tines 20 intertwine the crop together and pack the crop within the pre-compression chamber 22. Pre-compression chamber 22 and packer tines 20 function as the first stage for crop compression. Once the pressure in the pre-compression chamber 22 reaches a predetermined sensed value, a stuffer unit 24 moves the wad of crop from the pre-compression chamber 22 to a main bale chamber 26. The stuffer unit 24 includes stuffer forks 28 which thrust the wad of crop directly in front of a plunger 30, which reciprocates within the main bale chamber 26 and compresses the wad of crop into a slice. The stuffer forks 28 return to their original stationary state after the wad of material has been moved into the main bale chamber 26. The plunger 30 compresses the wads of crop into slices to form a bale and, at the same time, gradually advances the bale toward an outlet 32 of the main bale chamber 26. The main bale chamber 26 and plunger 30 function as the second stage for crop compression. When enough slices have been added and the bale reaches a full (or other predetermined) size, knotters 34 are actuated which wrap and tie twine around the bale while it is still in the main bale chamber 26. Needles 36 bring the lower twine up to the knotters 34 and the tying process then takes place. The twine is cut and the formed bale is ejected from a discharge chute 38 as a new bale is formed.

The plunger 30 is connected via a crank arm 40 with a gear box 42. The gear box 42 is driven by a flywheel 44, which in turn is connected via a drive shaft 46 with a PTO (power take-off) coupler 48. The PTO coupler 48 is detachably connected with a PTO spline at the rear of a traction unit, such as a tractor (not shown).

On large square balers, such as the one of Fig. 1, a cut-out clutch can be installed on a rotor shaft (which is associated with the rotating pickup roll 14 or the stub augers in the example of Fig. 1) or a packer shaft (associated with the packer unit 18) to prevent the mechanical limits of the machine being exceeded. The concept of the clutch is as follows. When the tractor 10 is speeding up, more and more crop is harvested per second and the required torque on the rotor and packer increases. When the torque exceeds the value of the clutch, the clutch disengages and the crop flow is abruptly stopped, thereby protecting the machine. The downside, however, is that a large amount of crop is suddenly blocked underneath the rotor or packer. When this happens, the operator must immediately stop driving and perform an operation to remove the crop blockage. This operation can take a few minutes, reducing the productivity of the baler 10 and potentially stressing the mechanical components of the baler 10.

In other examples, a slip clutch can be used instead of the cut-out clutch that is described above. Although use of a slip clutch can enable the baler to still operate when the torque through the associated shaft is temporarily greater than the maximum torque value of the clutch, when the clutch does slip it still results in sub-optimal performance of the baler 10.

Since the operator has no direct way of controlling the rotor torque, they typically drive with a large torque margin (i.e., at a speed that is well below the level of torque that would cause the clutch to disengage) in order to prevent frequent rotor / packer blockages. The baler 10 is therefore often operated below its installed capacity.

As will be discussed in detail below, examples of the present disclosure can provide a way of controlling the driving speed of the baler 10 (in the example of Fig. 1, by controlling the speed of the tractor that provides the motive force to the baler 10) such that the rotor or packer torque is close to the limit given by the clutch. In this way, the baler 10 can bale close to its maximum capacity without frequent rotor blockages.

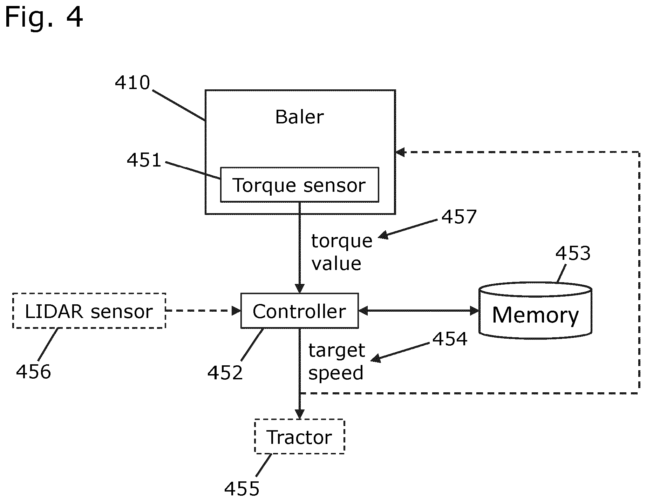

Fig. 4 shows schematically a system according to an embodiment of the present disclosure. The system includes a controller 452 for a baler 410. The functionality of the controller 452 may be performed by a processor that is located on the baler 410, by a processor which is remote from the baler 410, or by a combination of the two.

Th controller 452 receives a torque value 457 from a torque sensor 451. The torque value 457 is representative of the torque passing through a component of the baler 410. Any torque sensor that is known in the art can be used, such that it provides a signal to the controller 452 that is representative of the torque value 457. The torque sensor 451 can be associated with any suitable rotatable shaft in the baler 410, including: the packer shaft (which, as discussed above with reference to Fig. 1 can be associated with a packer unit 18 of the baler); a rotor shaft (which, as discussed above, may be associated with a pickup of the baler); or a drive shaft (which, as discussed above, is directly or indirectly connected to a PTO of the tractor).

The controller 452 then compares the received torque value 457 with a torque setpoint. In this example, the controller 452 retrieves the torque setpoint from computer memory 453. As will be discussed in detail below, the torque setpoint is less than a maximum allowed torque and it can either have a fixed value or it can be dynamically set. The controller 452 then determines a target speed 454 for the baler 410 based on the difference between the received torque value 457 and the torque setpoint. In this way, the controller 452 determines the target speed 454 in order to minimise the error between the torque setpoint and the measured torque. Furthermore, if the baler 410 is driven at the target speed 454 then it can more easily be operated near its maximum capacity with an acceptably low likelihood of blockages occurring due a clutch that is associated with one of the shafts disengaging.

In some examples, the controller 452 can compare only the most recently received torque value 457 to the torque setpoint in order to determine the target speed 454. This enables the target speed 454 to be adjusted very quickly in response to a change in the received torque values 457. Alternatively, as will be described in more detail below, the controller 452 can apply PID (proportional-integral-derivative) control to the received torque values 457. In this way, the controller 452 can determine the target speed 454 based on the difference between: a plurality of received torque values 457; and ii) the torque setpoint. The plurality of received torque values 457 are sequentially generated over a period of time from the same torque sensor 451, such that they can include a current torque value 457 and one or more earlier torque values 457. The earlier torque values 457 can be stored in the memory 453 that is shown in Fig. 4.

The determined target speed 454 can be used in one or more of a number of different ways to improve the performance of the baler 410. The performance can be improved in terms of one or more of: improving the speed / efficiency of a baling operation; increasing the baling capacity of the baler, in terms of the amount of crop that it can pick up in a given time; reducing the number of interruptions to the baling operation, for instance because there are fewer blockages; and reducing the amount of crop that is left in the field because a clutch associated with a shaft in the baler 410 has been disengaged while the baler 410 is driving over the crop.

In one example, the controller 452 can automatically control the speed of the baler 410 based on the determined target speed 454. If the baler 410 is self-powered, then this can include automatically controlling a throttle of the baler 410. If a tractor 455 (or other vehicle) is used to provide a motive force to the baler 410 (for example by pulling or pushing the baler 410), then the controller 452 can automatically control the speed of the tractor 455. This can enable a baling operation to be performed that prioritises capacity of crop pick-up.

In another example, the controller 452 can set a speed limit of the baler 410 based on the determined target speed 454. In this way, an operator of the baler 410 (and the associated tractor 455 if there is one) can manually set the speed of the baler 410 / tractor 455 as they drive over the swath, but the controller limits the speed of the baler 410 such that it cannot exceed the determined target speed 454. Advantageously, this can enable the operator to adjust the speed of the baler 410 to allow for driving conditions whilst reducing the likelihood that the baler 410 gets blocked as a result of a clutch disengaging due to too much torque passing through a component of the baler 410. Therefore, this can enable a baling operation to be performed that enables the operator to have greater control over avoiding blockages at the expense, potentially, of a slightly reduced capacity of crop pick-up.

In a further example, the controller 452 can display the determined target speed 454 to an operator of the baler 410. It will be appreciated that in some examples this can also be the operator of an associated tractor 455. In this way, the operator can control the speed of the baler 410 in response to the displayed target speed. Therefore, the displayed target speed assists the operator in performing the technical task of a baling operation by means of a continued and / or guided human-machine interaction process of how the operator operates the baler 410 (in particular, how the operator controls the speed of the baler 410). In some implementations, the controller 452 displays the target speed 454 relative to a current speed of the baler 410. This can be useful for visualising to the operator how far from the target speed (which can be considered as an appropriate maximum speed) they are operating. In some implementations, the controller 452 can also cause a representation of the measured torque values 457 compared to the maximum allowed torque to be displayed. The maximum allowed torque may be the torque setpoint, or it may be a maximum torque value that is associated with one or more clutches in the baler. With a large difference that the operator can still speed up, while with a small difference the driving speed is close to its maximum. Such information can be displayed to the operator alongside the determined target speed 454 in some examples. Also, this information can be displayed to the operator in those examples where the determined target speed 454 is used as a speed limit for the baler 410.

Returning now to how the controller 452 can determine the target speed 454 for the baler 410, in some examples, the controller 452 can compare each of a sequence of received torque values 457 with the torque setpoint in order to generate a sequence of torque error values. The controller 452 can then apply a PID algorithm to the sequence of torque error values in order to determine a control output signal. In this way, the controller 452 can take into account the current and the past torque error values to determine the desired target speed 454. The control output signal may be for directly controlling the speed of the baler 410 (as represented by the target speed 454 in Fig. 4), or the control output signal may be for indirectly controlling the speed of the baler 410 (as will be discussed below with reference to the generation of an intermediate "desired amount of crop intake signal").

In another example of the present disclosure, a degree of smoothing can be applied to the measured torque values 457 such that the target speed is not updated too quickly and potentially erratically. This smoothing will now be described as being performed by the controller 452 of Fig. 4, although it will be appreciated that this functionality could be performed by a processor that is associated with the torque sensor 451 such that the torque sensor provides an averaged torque value. The smoothing being part of the controller also serves a second purpose. The smoothing determines how aggressively the controller reacts to changes in the crop, or vice versa, the smoothing decides which (short) torque peaks to react to and which not to react to (because they can be handled by the clutch).

The controller 452 can determine an averaged torque value based on a plurality of earlier received torque values 457. For example, a plurality of earlier torque values 457 that are received over a predetermined period of time can be processed to determine the averaged torque value. In a simple implementation, the averaged torque value can be calculated as the mean of the plurality of earlier received torque values 457. The controller 452 can then determine the target speed 454 for the baler 410 based on the difference between the averaged torque value and the torque setpoint. It will be appreciated that the description of processing a received torque value throughout this document, especially in relation to determining the target speed 454, can equally apply to processing the averaged torque value (unless the context dictates otherwise).

In implementations that use PID control, the controller 452 can directly provide the target speed 454 as an output signal. Alternatively, the controller 452 can provide an output signal (for example a target crop flow signal) that is subsequently processed to determine the target speed 454.

In other implementations, the controller 452 can increase or decrease the target speed 454 in a stepwise fashion. For instance, the controller 452 can determine the target speed 454 based on the difference between the received torque value 457 and the torque setpoint by: i) increasing the target speed by a predetermined amount if the received torque value is at least a minimum amount less than the torque setpoint; and ii) decreasing the target speed by a predetermined amount if the received torque value is at least a minimum amount greater than the torque setpoint. In this way, the target speed 454 is adjusted gradually in a stepwise manner, which can be useful for providing smooth operation of the baler 410. Furthermore, if the received torque value is sufficiently close to the torque setpoint (i.e., it is not at least a minimum amount less than the torque setpoint; and it is not at least a minimum amount greater than the torque setpoint), then the controller 452 does not change the target speed 454.

In another implementation, the controller 452 can determine the target speed 454 based on the magnitude of the difference between the received torque value 457 and the torque setpoint by: i) if the received torque value 457 is less than the torque setpoint (optionally, at least a minimum amount less than), then increasing the target speed by an amount that is based on the magnitude of the difference between the received torque value and the torque setpoint; and ii) if the received torque value 457 is greater than the torque setpoint (optionally, at least a minimum amount greater than), then decreasing the target speed 454 by an amount that is based on the magnitude of the difference between the received torque value 457 and the torque setpoint. For instance, the controller 452 can apply a predetermined mathematical operation to the received torque value 457, which also uses the torque setpoint, in order to calculate the target speed 454. Such a mathematical operation may, or may not, define a linear relationship between a torque offset (i.e., a difference between the received torque value 457 and the torque setpoint) and an amount to change the target speed 454. Alternatively, the controller 452 may use a look-up table (LUT) or database to determine the target speed 454 (or to determine an amount to change the target speed 454) based on the received torque value 457 and the torque setpoint.

In any case, the torque on a shaft in the baler 410 can be measured such that the target speed 454 (which can also be referred to as a driving speed setpoint) can be increased when the measured torque is too low, and can be decreased when the torque value is too high. As discussed above, this improves the performance of the baler 40.

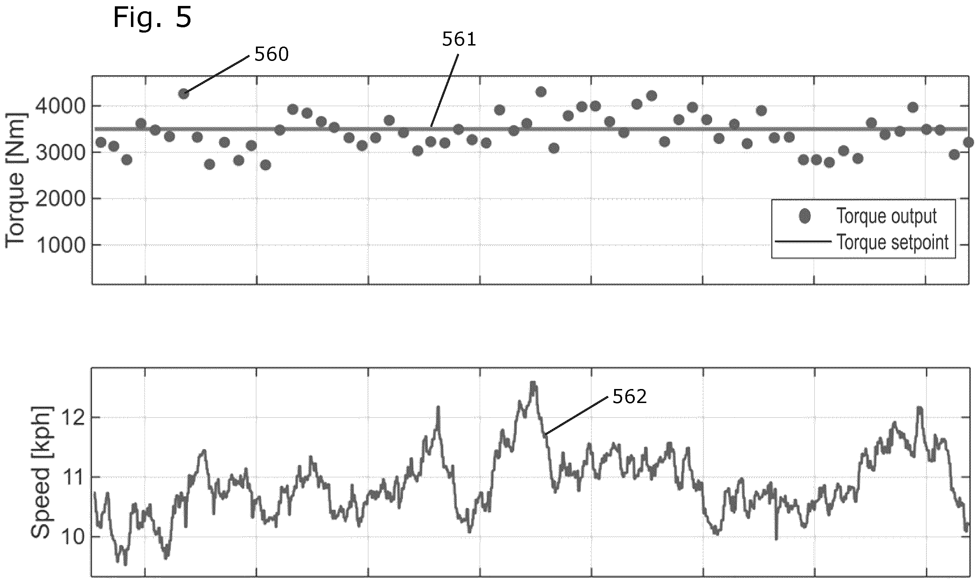

Fig. 5 shows two plots that will be used to describe operation of the controller of Fig. 4, when it is used to automatically control the speed of the baler.

The upper plot in Fig. 5 shows received torque values (one of which is identified with reference number 560 in Fig. 5) over time on the horizontal axis, along with the torque setpoint 561 (which is static in this example). The lower plot in Fig. 5 shows the speed 563 of the baler over the same time period as the upper plot. As can be seen from the plots of Fig. 5, the speed 563 of the baler is increased when the torque values 560 are less than the torque threshold 561 such that the torque values 560 then increase and they get closer to the torque setpoint 561, and *vice versa.* In this way, the speed 563 of the baler is automatically controlled such the torque values 560 are expected to remain at a level that is close to the torque setpoint 561. As will be discussed in detail below, the torque setpoint 561 can be set at a level such that there is expected to be an appropriate amount of headroom between the received torque values 560 during operation and the maximum allowed torque (above which a clutch may disengage, for example). For instance, the torque threshold can be set at 90% of the of the maximum allowed torque, although it will be appreciated that different value may be used for different crop properties (such as crop moisture) and / or for different environmental conditions.

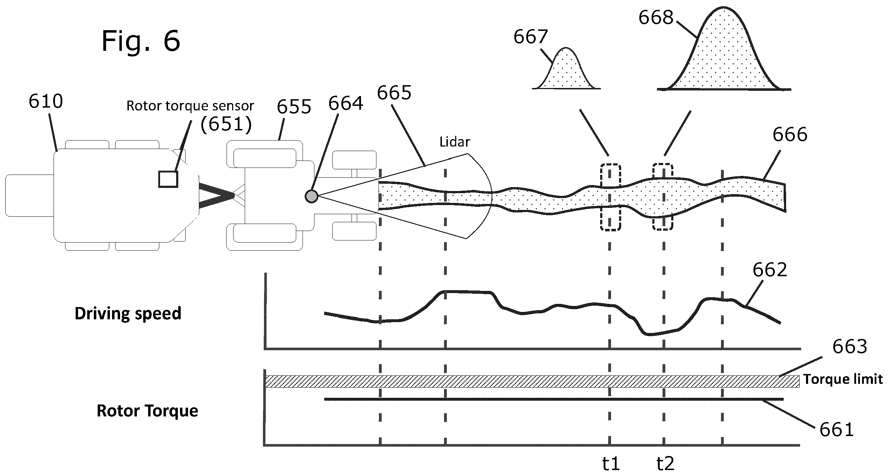

Fig. 6 illustrates schematically a baler 610 according to an embodiment of the present disclosure when it is in use in an agricultural field. The baler 610 in this example is towed by a tractor 655, such that it moves over and picks up a row of swath 666. Two plots are shown underneath the row of swath 666 in the drawing. The two plots show data that is associated with the baler 610 being in a corresponding position along the row of swath 666. The upper plot shows the driving speed 662 of the tractor 655, and therefore also the speed of the baler 610. The lower plot shows the torque of a rotor shaft in the baler on the vertical axis. The lower plot also illustrates a torque limit 663 (which can be the level of torque at which a clutch associated with the rotor shaft) as well as the received torque values 661. In this example, for illustration purposes, the torque values 661 are perfectly aligned with the torque setpoint such that there is very little variability in the torque values 661 because the driving speed 662 of the tractor is being very accurately controlled.

In this example, the controller applies PID control to a torque error signal in order to determine a desired amount of crop intake signal, which in this example is a crop flow rate signal. As indicated above, the crop flow rate signal can be considered as an intermediate signal in the determination of the target speed. The controller then applies a second processing step of converting the crop flow rate signal into the target speed. In this example, the controller applies a model to convert the crop flow rate signal into the target speed. As will be discussed below, advantageously this model can be adjusted based on properties of the swath that are measured while the baler 610 is in use in the field.

The tractor 655 in this example also includes a LIDAR (Light Detection and Ranging) sensor 664, which has a field of view 665 that encompasses a region of the swath 666 that is to be picked up by the baler 610. The LIDAR sensor is also illustrated in Fig. 4 with reference number 456. The LIDAR sensor 664 provides a swath measurement value to the controller, which represents a cross-sectional area of swath that will be picked up by the baler. In this way, the swath measurement value represents an amount of swath / crop that is to be processed by the baler. It will be appreciated that in other examples a different type of sensor can be used to provide swath measurement values that more generally represent the amount of crop entering the baler, such as an infrared sensor, a camera, any suitable optical sensor, a RADAR sensor, etc. The sensor may be located on the tractor 655 as shown in Fig. 6, or it may be located elsewhere such as on a drone (i.e., an unmanned aerial vehicle). As a yet further example, the sensor may be located on a harvester vehicle that created the swath 666 such that a map of swath properties can be generated when the swath is created for subsequent use during a baling operation.

Returning to Fig. 6, the controller can determine the target speed for the baler based on the swath measurement value and also based on received torque values. For example, the controller can use the received torque values to determine a torque error signal that is used in generating the crop flow rate signal. The controller can then use the swath measurement value to set parameters of the model that is used to convert the crop flow rate signal to the target speed. More particularly, the controller can set the model parameters such that the target speed 662 results in the received torque values matching the expected torque setpoint. This is illustrated in Fig. 6, whereby: i) at a first instant in time, t1, the swath has a relatively small cross-sectional area (as identified by a cross-sectional representation of the swath that is identified with reference number 667 in Fig. 6); and ii) at a second instant in time, t2, the swath has a relatively large cross-sectional area (as identified by reference number 668 in Fig. 6). It can be seen that the driving speed 662 of the baler reduces between t1 and t2, yet the received torque values 661 remain at the desired torque setpoint.

In this example, the controller is therefore able to use the swath measurement values that are received from the LIDAR sensor 664 to improve the control of the driving speed 663 of the baler. In this way, the model is tuned based on values that have been previously received by the controller (preferably by values that have been previously received by the controller while the baler 610 has been working in the same agricultural field). In this way, the margin between the torque setpoint 661 and the maximum torque 663 that can be experienced by the component in the baler can be accurately maintained to enable optimal performance of the baler 610. For example, by maximising the speed of the baler 610 while retaining an acceptably low risk that the baling operation needs to be interrupted to remove a blockage. In this way, the controller can automatically control the driving speed 662 in an acceptable way even if there is variability in the swath, such as the presence of a branch or local crop property changes such as wet spots.

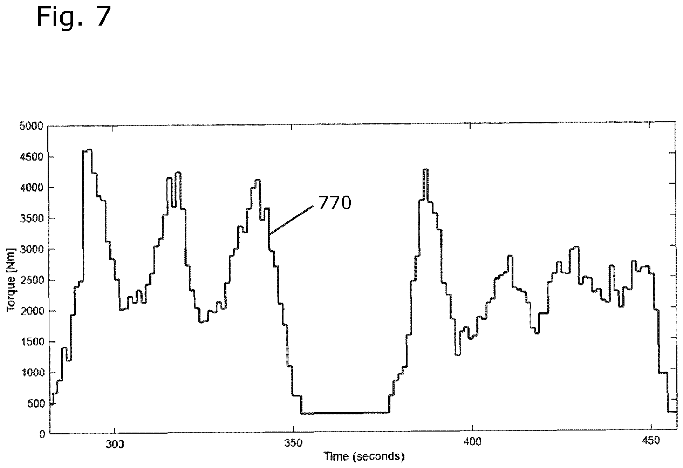

Turning now to Fig. 7, an example plot of measured torque values 770 is shown.

The plot of measured rotor torque values 770 in Fig. 7 identifies the peak torque value for each revolution of the associated shaft. It will be appreciated that raw data that is measured by the associated torque sensor will have an oscillating waveform. It will also be appreciated that any discussion of processing or providing a torque value in this document can be construed as processing or providing a maximum or an average torque value over a predetermined duration, such as a complete revolution of the associated shaft.

In any of the examples disclosed herein, the controller can determine the variability of received torque values over an earlier period of time, and it can set the torque setpoint based on the determined variability. For example, the controller can determine a standard deviation of the received torque values over an earlier period of time, or it can determine any other measure of variation including those based on RMS (root-mean-square) calculations. The controller can set the torque setpoint to a relatively high value if the determined variability of received torque values over the earlier period of time is a relatively low level; and set the torque setpoint to a relatively low value if the determined variability of received torque values over the earlier period of time is a relatively high level. In this way, the performance of the baler can be yet further improved by tuning the torque setpoint based on the actual conditions of the active baling operation such that the size of the margin between the torque setpoint and the maximum torque that can be accommodated by the clutch before it disengages can be minimised. Therefore, this enables the efficiency of the baling operation to be increased yet further.

In some implementations, the controller can set the torque setpoint to an initial setpoint value. The initial setpoint value can be a relatively low one, which is considered unlikely to result in blockages and therefore considered a relatively safe starting point for the torque setpoint. The controller can than set the torque setpoint to a new value based on the determined variability following receipt of a new torque value, for example for each plunger cycle. Alternatively, the controller can incrementally increase the torque setpoint if the determined variability of received torque values over the earlier period of time is less than a variability threshold value. In this way, the torque setpoint can be gradually increased and correspondingly the baling capacity of the baler can also be gradually increased. Similarly, the controller can incrementally decrease the torque setpoint if the determined variability of received torque values over the earlier period of time is greater than a variability threshold value (which may or may not be the same as the variability threshold value that is used when incrementally increasing the torque setpoint).

In this way, the controller can compute a desired torque setpoint, which is below the maximum allowed torque, so that the baler should not block when sudden changes in the crop cause (temporal) torque increases.

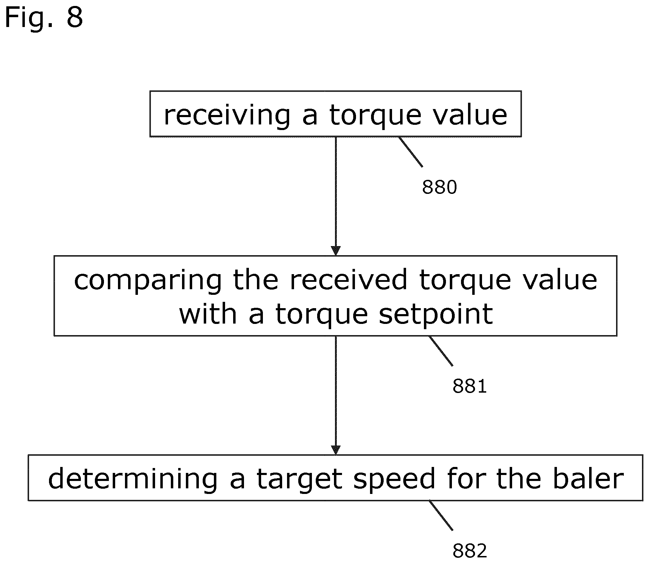

Fig. 8 illustrates schematically a computer-implemented method of operating a baler according to an embodiment of the present disclosure.

At step 880, the method includes receiving a torque value, representative of the torque passing through a component of the baler. As discussed above, the torque value can be provided by a torque sensor that is associated with a rotatable shaft of the baler such as rotor shaft, a packer shat and a drive shaft.

At step 881, the method includes comparing the received torque value with a torque setpoint, and at step 882, the method determines a target speed for the baler based on the difference between the received torque value and the torque setpoint. In some examples, this can involve application of a PID control algorithm, which can utilise computer memory for storing previous received torque values. In this way, as discussed in detail below, the performance of the baler can be improved.

It will be appreciated from the above description that the torque setpoint can be manually set by an operator or determined by a controller. In the latter case, the torque setpoint can be aligned with the settings of a clutch, such as the slip clutch that is mentioned above. For instance, the torque setpoint can have a value that incorporates some margin when compared with the maximum torque that can be handled by the clutch in order to reduce the likelihood of experiencing uncontrollable torque values. So, for example, if the crop contains many branches or other items that might suddenly impact the required torque for harvesting, the controller's torque setpoint can be set lower than the limit provided by the slip clutch. One way to determine how much lower the torque setpoint should be is by computing the standard deviation of previous torque values and setting the torque setpoint at a value that is at least that much lower than the clutch's torque limit.

Although the examples disclosed above relate to square balers, it will be appreciated that the concepts disclosed herein can be equally applicable to round balers.

## Claims

1. A controller (452) for a baler (410), the controller (452) configured to:
receive a torque value (457), representative of the torque passing through a component of the baler (410);
compare the received torque value (457) with a torque setpoint; and
determine a target speed (454) for the baler (410) based on the difference between the received torque value (457) and the torque setpoint.

2. The controller of claim 1, wherein the controller is configured to determine the target speed based on the difference between: i) a plurality of received torque values that have been sequentially generated over a period of time; and ii) the torque setpoint.

3. The controller of claim 2, wherein the controller is configured to:
compare each of the sequence of received torque values with the torque setpoint in order to generate a sequence of torque error values; and
apply a proportional-integral-derivative algorithm to the sequence of torque error values in order to determine the target speed for the baler.

4. The controller of any preceding claim, wherein the controller is configured to determine the target speed for the baler based on the magnitude of the difference between the received torque value and the torque setpoint by:
if the received torque value is less than the torque setpoint, then increasing the target speed by an amount that is based on the magnitude of the difference between the received torque value and the torque setpoint; and
if the received torque value is greater than the torque setpoint, then decreasing the target speed by an amount that is based on the magnitude of the difference between the received torque value and the torque setpoint.

5. The controller of any preceding claim, wherein the component of the baler comprises:
a packer shaft;
a rotor shaft; or
a drive shaft that is connectable to a power take-off of an associated tractor.

6. The controller of any preceding claim, wherein the controller is further configured to:
automatically control the speed of the baler based on the determined target speed.

7. The controller of claim 6, wherein the controller is further configured to automatically control the speed of a tractor that is providing a motive force to the baler based on the determined target speed.

8. The controller of any one of claims 1 to 5, wherein the controller is further configured to:
set a speed limit of the baler based on the determined target speed.

9. The controller of any one of claims 1 to 5, wherein the controller is further configured to:
display the determined target speed for the baler to an operator of the baler such that the operator can control the speed of the baler in response to the displayed target speed.

10. The controller of claim 9, wherein the controller is further configured to display the target speed for the baler relative to a current speed of the baler.

11. The controller of any one of claims 8 to 10, wherein the controller is further configured to display the received torque value relative to the torque setpoint and / or a maximum torque value.

12. The controller of any preceding claim, wherein the controller is configured to:
determine the variability of received torque values over an earlier period of time; and
set the torque setpoint based on the determined variability.

13. The controller of any preceding claim, wherein the controller is configured to:
receive a sequence of swath measurement values, which represents the amount of crop entering the baler over a period of time; and
determine a sequence of torque error values based on the difference between: i) a plurality of received torque values that have been sequentially generated over the period of time; and ii) the torque setpoint;
apply a control algorithm to the sequence of torque error values to determine a sequence of desired amount of crop intake values;
use the sequence of swath measurement values to set parameters of a model that is used to convert the sequence of desired amount of crop intake values to the target speed; and
determine the target speed for the baler by applying the model to the sequence of desired amount of crop intake values.

14. A baler comprising the controller of any preceding claim.

15. A computer-implemented method of operating a baler, the method comprising:
receiving a torque value, representative of the torque passing through a component of the baler;
comparing the received torque value with a torque setpoint; and
determining a target speed for the baler based on the difference between the received torque value and the torque setpoint.
